# EUROPEAN PATENT SPECIFICATION

(11) **EP 2 106 934 B1**
(45) Date of publication and mention of the grant of the patent: **06.03.2013**
(21) Application number: 08075231.4
(22) Date of filing: 31.03.2008
(51) Int. Cl.: B60G 7/00, B60G 7/02, B60G 9/00, B60G 11/12, B60G 11/46, F16F 1/393

(54) **Hinging arrangement for a wheel axle suspension**
Scharnieranordnung für eine Radachsenaufhängung
Agencement d'articulation pour suspension d'axe de moyeu

(43) Date of publication of application: 07.10.2009
(73) Proprietor: VDL Weweler B.V., 7332 AP Apeldoorn (NL)
(72) Inventor: Bramer, Hans, 6961 WR Eerbeek (NL); Aalderink, Derk Geert, 7245 NV Laren (NL)
(74) Representative: Houben, Christiaan Hein Willem Frans

(56) References cited:
- EP-A- 0 504 593
- EP-A- 0 615 869
- EP-A- 0 943 529
- EP-A- 1 459 914
- EP-A- 1 728 654
- WO-A-03/072377
- DD-A- 23 979
- FR-A- 2 162 838
- FR-A- 2 737 443
- GB-A- 257 009
- US-A- 1 931 945
- US-A- 2 308 967
- US-A- 2 477 447
- US-A- 2 621 949
- US-A- 2 900 182
- US-A- 3 493 222
- US-A- 4 175 806
- US-A- 4 595 216
- US-A- 5 193 787
- US-A- 5 337 997
- US-A- 5 362 095

## Description

The present invention relates to a wheel axle suspension for a vehicle, comprising a longitudinal suspension arm to which the axle is fixed, a bearing bracket fixed to the vehicle chassis and an air spring bearing against the vehicle chassis, wherein the suspension arm, seen in the driving direction of the vehicle, on its rear end is attached to the air spring and on its front end is hingedly attached to the bearing bracket by means of a hinging arrangement, comprising an attachment eye fixed to the suspension arm, and a hinge pin attached to the bearing bracket, which hinge pin is extending through the attachment eye.

Such a wheel axle suspension is known, for instance from EP-A-943 529, in which a front end portion of a suspension arm is hingedly attached to a bearing bracket which is attached to a vehicle chassis. In this hinging arrangement a cylindrical metal bushing is clamped between the side plates of the bearing bracket. Surrounding the metal bushing is arranged a cylindrical rubber bushing which engages the inner side of the attachment eye and allows a rotational movement of the suspension arm around the hinging pin.

Document US-A-349 222 discloses a wheel axle suspension for a vehicle, comprising a longitudinal suspension arm in the form of a wrapped eye leaf spring which, seen in the driving direction of the vehicle, on its rear end is fixed to the axle and on its front end is hingedly attached to a bearing bracket in the form of a forward hanger by means of a hinging arrangement comprising an attachment eye integrally formed in the suspension arm, and a hinge pin attached to the bearing bracket, which hinge pin is extending through the attachment eye, the attachment eye having a bore for the hinge pin which comprises tapered surfaces extending inwardly from each end to a central cylindrical surface, the arrangement further comprising a pair of resilient rings each in the form of a flexible elastomeric bushing and a clamping member (e.g. in the form of an end washer drawn by a nut and headed bolt) each provided with a central bore for the hinge pin, wherein, in the mounted state, the pair of flexible elastomeric bushings are received at least partially within the tapering bore portions with each resilient ring bearing with one side against one of the tapering surfaces of the tapering bore portion, wherein the forward hanger comprises a pair of substantially parallel side plates provided with aligned tapered sleeves welded thereto defining holes for passing through the hinge pin, wherein the attachment eye of the suspension arm is located between the side plates such that the central bore therein and the holes in the side plates are brought in line. The bushings are secured to cylindrical sleeves which are moved into engagement with a central cylindrical sleeve disposed in the attachment eye in engagement with the central cylindrical portion thereof.

Document FR-A-2 737 443 discloses a wheel axle suspension for a vehicle, comprising a longitudinal suspension arm to which the axle is fixed, a bearing bracket fixed to the vehicle chassis, wherein the suspension arm, seen in the driving direction of the vehicle, on its front end is hingedly attached to the bearing bracket, the wheel axle suspension further comprising a shock absorber which is hingedly coupled at one end to the axle and at the other end to the bearing bracket by means of a hinging arrangement, the hinging arrangement comprising an attachment eye fixed to the shock absorber to be hingedly attached to the bearing bracket, and a hinge bolt, attached to the bearing bracket, which hinge bolt extends through a bore in the attachment eye, the arrangement further comprising a resilient ring received within the bore and a clamping member each provided with a central bore for the hinge bolt, wherein the bearing bracket comprises two substantially parallel side plates provided with holes for passing through the hinge bolt, wherein the shock absorber attachment eye is located between the side plates such that the central bore therein and the holes in the side plates are brought in line, and wherein in the side plates are formed inwardly projecting dents, wherein the clamping members are received in the outer side of the dent, the outer side of the dents and the inner side of the clamping members having a corresponding spherical form.

Document US-A-2 900 182 discloses a wheel suspension comprising a suspension arm to which the wheel is connected, a pair of bearing brackets fixed to the vehicle chassis, wherein the suspension arm is hingedly attached to each bearing bracket by means of a hinging arrangement, the end of the suspension arm comprising a fixed head including a first internal conical seat within which a frusto-conical bearing member of laminated metallic-elastic construction (wherein successive layers of elastic rubber are separated by layers of metal) may be seated, with the external surface thereof, engaging against the seat, wherein each bearing bracket comprises a single flange that is apertured for the purposes of receiving therethrough a stud, one free end of which defines a flared head that is formed in frusto-conical configuration so as to complementally engage the inner surface of the bearing member that is received within the seat and wherein a frusto-conical block surrounds the stud and is butted against its shoulder at a point intermediate the flared end and the threaded end, to accordingly define a frusto-conical surface capable of engaging the internal surface of the conical bearing member that engages a conical surface, the stud including the usual washer and nut, for the purposes of tightening the same and maintaining the overall bearing support.

Other wheel axle suspensions having a suspension arm which on its front end is hingedly connected to a bearing bracket are known from EP 1 728 654, US 5 362 095 and EP 1 459 914.

US 4 175 806 discloses a bush assembly for a radius rod or rocker arm which includes an eye at an end of the rod or arm oscillatable on a pin the ends of which are engaged in a bracket, a pair of resilient outer bushes being engaged on a pair of tubular outer spacers on the pin and in openings in the bracket, and a pair of resilient inner bushes being engaged on a pair of tubular inner spacers on the pin and in the eye of the rod or arm, the inner bushes being frictionally bonded to the eye and to the inner spacers, which are freely rotatable on the pin.

US 2 621 949 discloses a resilient bush which may be used in the bearing eye of a vehicle spring. The bearing eye has oppositely tapering end portions in its bore. The resilient bush has an outer sleeve of rubber and an inner sleeve of metal, wherein the outer sleeve of rubber has an external surface which has a taper.

GB 257 009 discloses the attachment of a shock absorber with an eyelet with two opposite tapering bore portions. In the bore portions conical bushing of compressed cork or compressed cork and rubber are arranged.

US 1 931 945 discloses a spring eye joint wherein the spring eye has two opposite tapering bore portions. In the eye are arranged conical rubber sleeves.

FR 2162838 discloses a hinging arrangement with an eye having two opposite tapering bore portions. In the bore portions rubber sleeves with a conical outer surface are arranged.

WO 03/072377 discloses a leaf spring support with two bearing elements which comprise a number of conical, tubular supporting elements made of metal or a composite and at least one conical tubular liner made of a rubber or plastic material.

US 2 308 967 discloses a spring shackle that at its lower end is pivotally connected to a spring. At the upper end the shackle is pivotally connected to a hanger through a stud bolt. The stud bolt is yieldingly connected to the shackel through a pair of rubber bushings, which are externally of frusto-conical shape. The bushings are received in a bore in the shackle that is flared or divergent toward its respective ends.

The invention has for an object to provide a wheel axle suspension with an alternative hinging arrangement.

This object is achieved by a wheel axle suspension according to claim 1.

With "tapering bore portion" as meant in this application is meant a bore portion having a first end and a second end, wherein the bore at the first end has a larger diameter than at the second end, and wherein the diameter of the bore portion is continuously decreasing from the first end towards the second end. This tapering shape could be a conical shape, but could also be a spherical shape.

Often the suspension arm is a resilient member. The hinging arrangement according to the invention is then able to support the suspension arm in all directions. The hinging arrangement absorbs forces in rotation direction by a hinging action, which hinging action is due to springing action of the suspension arm. Furthermore, the hinging arrangement is able to absorb forces in transverse direction, horizontal forces due to braking action on the wheels of the vehicle, and vertical direction which are due to loads on the axle and roll movements. Also occurs an absorbtion of torsion, which is due to roll movement of the vehicle.

An advantage is that due to the tapering shape the eye can be made by forging more easily without the need to machine the eye afterwards in order to callibrate the bore.

Preferred embodiments of the invention are defined in the dependent claims.

The invention will be explained in more detail in the following description of preferred embodiments with reference to the drawing, in which:
Fig. 1 shows a side view of a preferred wheel axle suspension of a vehicle with a typical suspension arm,
Fig. 2 shows a sectional view of a hinging arrangement of the suspension arm according to the section A-A as indicated in Fig. 1,
Fig. 3 shows a front view of the wheel axle suspension of Fig. 1,
Fig. 4 shows a top view of the front end portion of the suspension arm of Fig. 1,
Fig. 5 shows a side view of the front end portion of the suspension arm of Fig.1,
Fig. 6 shows a sectional view according to the section line C-C as indicated in Fig. 5,
Fig. 7 shows a sectional view of another preferred embodiment of a hinging arrangement for a suspension arm according to the invention,
Fig. 8 shows a sectional view of another embodiment of a hinging arrangement,
Fig. 9A and 9B illustrate in a sectional view and a view in perspective respectively yet another embodiment of a hinging arrangement,
Fig. 10 shows still another embodiment of a hinging arrangement, and
Fig. 11 shows another embodiment of a hinging arrangement in particular suitable for a shock absorber.

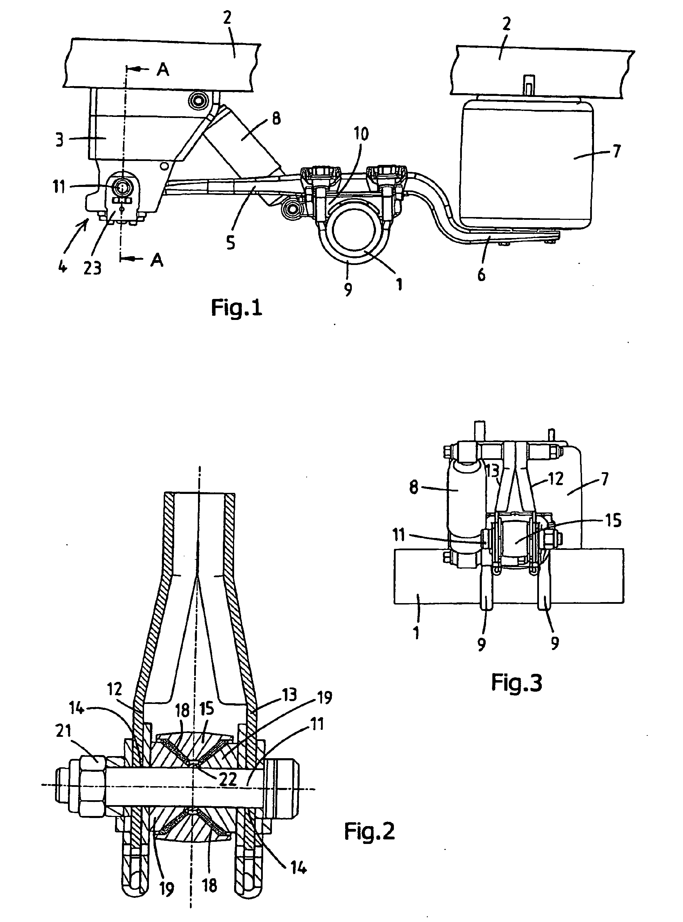

Fig. 2,3 and Fig. 8-11 show arrangements that do not form part of the present invention but which are useful for understanding the invention.

Fig. 1 shows one side of a wheel axle suspension of a vehicle, e.g. of a trailer. The wheel axle 1, on which one or more wheels are arranged at both ends, is illustrated as a hollow round axle. However, the wheel axle 1 may also be square or have some other cross section.

The wheel axle suspension shown in Fig. 1 comprises a carrying bracket 3 which is attached to the chassis of a vehicle, which is illustrated highly diagrammatically in Fig. 1 and indicated by the reference numeral 2. A suspension arm 5, which extends in the longitudinal direction of the vehicle, is hingedly attached to the carrying bracket 3 by a hinging arrangement 4. A pneumatic spring 7 is arranged between the free rear end portion 6 of the suspension arm 5, situated at a distance from the hinging arrangement 4, and the chassis 2. A shock absorber 8 fitted between the carrying bracket 3 and the suspension arm 5. The wheel axle 1 is fixed to the suspension arm 5 in a manner known per se, by means of an axle pad 10 arranged against the suspension arm 5 and forming a seat for the axle 1 and U-shaped bolts 9, with which the suspension arm 5, the axle pad 10 and the axle 1 are clamped together.

It is noted that the configuration of the wheel axle suspension as shown in Fig. 1 and the shape of the particular components 1 - 10 therein is to be considered an example only. Many other configurations and shapes are conceivable within the scope of the invention as defined by the working of claim 1.

The suspension arm 5 is fastened to the support bracket 3 by means of a hinging bolt 11. As is also shown in Figs. 2 and 3, (not forming part of the present invention) the support bracket 3 comprises two side plates 12 and 13, and the support bracket 3 is open towards the rear, as seen in the direction of travel. The hinging bolt 11 extends in the transverse direction through the support bracket 3 and fits through holes 14 in the side plates 11 and 12 of the support bracket 3. The holes 14 are designed as slots which extend substantially in the direction of the longitudinal suspension arm 5, such that the hinge bolt position can be adjusted and the suspension arms supporting the same axle can be aligned.

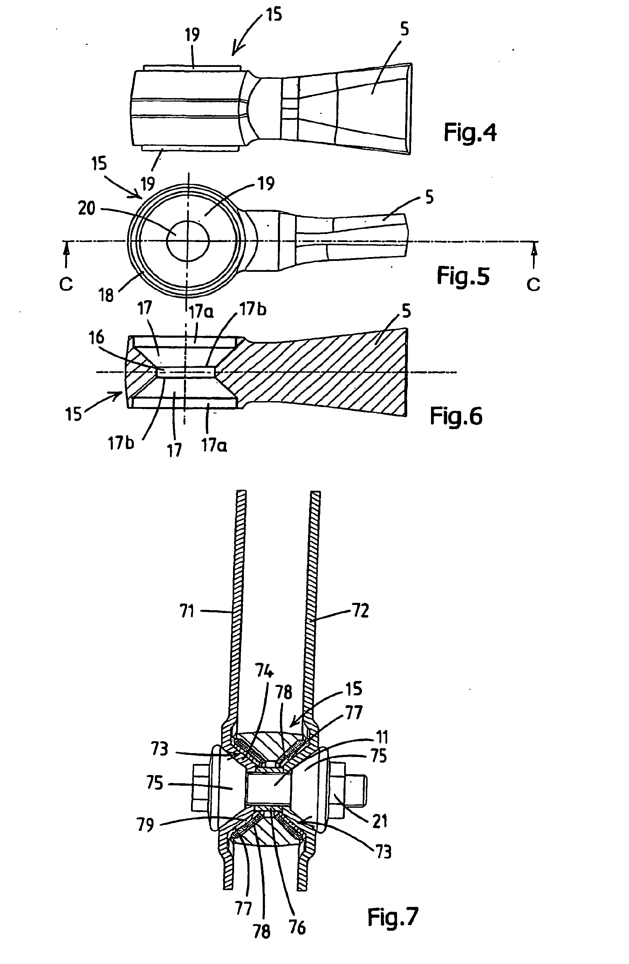

The suspension arm 5 is provided on its front end portion with an attachment eye 15, which is shown in more detail in Figs. 4 - 6. As can be seen particularly well in Fig. 6, the attachment eye 15 has a passage for the hinge bolt 11, said passage comprising a central bore 16 and two opposing tapering bore portions 17. The tapering bore portions 17 have an outer end 17a and an inner end 17b, wherein the outer end 17a has a larger diameter than the inner end 17b. The radially inwardly facing surface 17c of the tapering bore portion 17 is tapering from the outer end towards the inner end 17b. The diameter of the tapering bore portion 17 is thus continuously decreasing from the outer end 17a towards the inner end 17b. The central bore 16 has a constant diameter and connects the inner ends 17b of the respective tapering bore portions 17.

The hinging arrangement 4 further comprises a resilient ring 18, preferably made of rubber or another suitable elastomeric material. The rubber ring 18 is received within each of the tapering bore portions 17, as can be seen in Fig. 2. Said rubber ring 18 bears with one side against the tapering surface 17c of the tapering bore portion 17. In each of the tapering bore portions 17 is provided a conical clamping member 19. The clamping member 19 is provided with a central bore 20 for the hinge bolt 11. The clamping member 19 has a conical outer surface 19c that faces the tapering surface 17c of the tapering bore portion 17. In the mounted state, the clamping member 19 and the surface are clamped towards eachother by means of the hinging bolt 11 and a nut 21, compressing between them the resilient ring 18.

The resilient ring 18, which is preferably made of rubber is preferably vulcanized on the conical surface of the clamping member 19.

In the central bore 16, between the inner ends of the clamping members 19 facing each other, is arranged a distance bushing 22. The bushing 22, which is clamped between the inner ends of the conical clamping members 19 limits the compression force applied to the rubber rings 18 of the hinging arrangement 4.

The hinging arrangement of the suspension arm 5 is mounted as follows: In the attachment eye 15 of the suspension arm 5 are inserted the distance bushing 22 in the central bore 16 and the clamping members 19 with a rubber ring 18 vulcanized on their conical surface are inserted in each of the tapering bore portions 17. Adjustment brackets 23, which are know per se, e.g. from EP 943 529 are arranged on the side plates 12, 13 of the bearing bracket 3. Then the eye 15 of the suspension arm is inserted between the side plates 12, 13 of the bearing bracket 3. Next, the hinging bolt is inserted through the adjustment brackets , the side plates 12 and 13, the bores 20 of the clamping members 19, and through the bushing 22. This assembly is clamped together by means of tensioning the bolt 11 and nut 21 assembly.

The resilience of the rubber rings 18 provides a limited freedom of movement of the suspension arm in the rotational direction. Also a limited freedom in tranverse direction, i.e. axial direction of the bolt 11 and directions perpendicular thereto is provided by the resilient ring 18. Tensioning the metal parts against each other by means of the bolt 11 and nut 21 biases the rubber ring 18 which thereby obtains a long duration of life.

In Fig. 7 is shown a first embodiment of the hinging arrangement for the suspension arm 5 according to the present invention. In this embodiment the attachment eye 15 at the front end portion of the suspension arm 5 is similar to the one described above. In this embodiment the bearing bracket has substantially parallel side plates 71, 72 in which inwardly projecting dents 73 are provided in the region around the holes for the hinging bolt 11. The holes for the hinging bolt are preferably slotted holes, such that the hinge bolt 11, and therewith the suspension arms for the axle can be aligned. The dents 73 have a tapering side wall 74. The inner side of the dent 73 is received in the tapering bore portion 17 of the eye 15. On the outer side of the dent 73 clamping members 75 are received. The clamping members 75 have basically a frusto-conical shape of which the conical surface bears against the tapering surface of the dent. A spacer bushing 76 is located between the inner ends 77 of the opposing dents 73. On the inner side of the conical surface of the dents 73 is provided a dish shaped metal ring 77 on which a rubber ring 78 is vulcanized. The rubber ring 78 is bearing against the tapering surface of the tapering bore portion 17. The hinging bolt 11 passes through the clamping members 75, the side plates 71, 72, and the bushing 76. By tensioning the nut 21 on the bolt 11, the hinging arrangement is fixed.

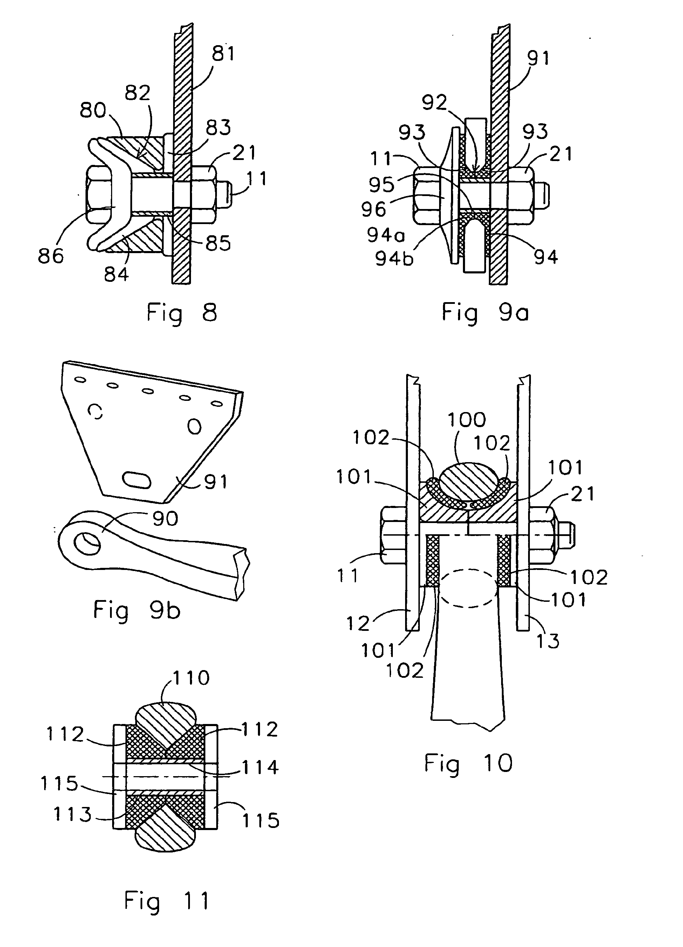

In Fig. 8 (not of forming part of the present invention) is shown a cross section through an asymetrical attachment eye 80 of a suspension arm. The eye 80 is attached to a bearing bracket comprising one single side plate 81. The eye comprises a conical bore 82 which tapers from the end remote from the side plate 81 towards the end near the side plate 81. Between the side of the eye facing the side plate 81 and the side plate 81 is located a flat rubber ring 83. In the tapering bore 82 is received a rubber ring 84. Furthermore is inserted in the bore 82 a spacer bushing 85 which bears with one end against the side plate 81 and a clamping member 86 with a conical outer surface and a bore for the shaft of a hinging bolt 11. The eye 80 of the suspension arm is clamped against the side plate 81 by means of the hinging bolt 11 and the nut 21. The rubber rings 83 and 84 provide some degree of freedom of movement in rotational direction around the central axis of the hinge bolt 11.

In Fig. 9A (not forming part of the present invention) is shown a cross sectional view of a hinging arrangement, wherein the bearing bracket comprises one single side plate 91. The attachment eye 90 of the suspension arm (cf. Fig. 9B) is symmetrical and has a relatively small width. It has a bore with a cilindrical central bore portion 92 and two opposing tapering bore portions 93. Two rubber rings 94 are inserted from opposite sides into the bore. The rubber rings 94 have a relatively flat base portion 94b and a frusto-conical portion 94a protruding from the base portion 94b. The frusto-conical portion 94a is received in the tapering bore portion 93 of the eye 90. The top sides of the frusto-conical portions 94a may abut each other in the central bore portion 92. The base portions 94b engage on the side surface of the eye 90.

A spacer bushing 95, preferably of metal, extends through the central holes of the rubber rings 94 and abuts with one end the side plate 91 of the bearing bracket. On the other end of the spacer bushing 95 engages a clamping member 96. The whole assembly is clamped together by the hinge bolt 11 cooperating with the nut 21.

According to the invention it is also conceivable that the bearing brackets with one single side plate 81, 91 as shown in Figs. 8 and 9 could be provided with a dent surrounding the, preferably slotted, hole for the hinging bolt 11, as is shown in Fig. 7.

In Fig. 10 (not forming part of the present invention) is shown pa y sectional view, partly elevational view of a hinging arrangement, wherein the attachment eye 100 has a circular cross section. The bore through the eye 100 thus has a tapering surface which narrows towards the center along a convex curve. The clamping members 101 have a curved outer surface and abut each other with their inner ends. Between each of the clamping members 101 and the tapring surface of the eye 100 is arranged a rubber ring 102. Said ring 102 has a thicknes that increases from the radially inner side f the rin 102 towards the radially outer side.

In Fig. 11 (not forming part of the present invention) is shown a cross sectional view of an attachment eye 110 with a drop shaped cross section. The bore through the eye 110 thus has two tapering opposing bore portions. In each of the tapering bore portions is inserted a rubber ring 112 with a frusto-conical shape. The rubber rings 112 abut each other at the center. The rubber rings 112 have a central passage 113 through which a spacer bushing of metal extends. On the outer end of each of the rubber rings 112 engages a clamping member 115 in this case configured as a metal ring. The assembly is clamped together in a similar way as described for the previously described embodiments by means of a bolt and a nut. The example shown in Fig. 11 is particularly suitable for hingedly attaching a shock absorber of a vehicle suspension.

## Claims

1. Wheel axle suspension for a vehicle, comprising a longitudinal suspension arm (5) to which the axle (1) is fixed, a bearing bracket fixed to the vehicle chassis and an air spring (7) bearing against the vehicle chassis, wherein the suspension arm (5), seen in the driving direction of the vehicle, on its rear end is attached to the air spring (7) and on its front end is hingedly attached to the bearing bracket by means of a hinging arrangement, comprising an attachment eye (15) fixed to the suspension arm (5), and a hinge pin (11), e.g. a hinge bolt, attached to the bearing bracket, which hinge pin (11) is extending through the attachment eye (15), wherein the attachment eye (15) has a bore (20) for the hinge pin (11) which comprises at least one tapering bore portion (17), the arrangement further comprising at least one resilient ring (78) and a clamping member (75) each provided with a central bore for the hinge pin, wherein, in the mounted state, the resilient ring (78) is received at least partially within said tapering bore portion (17), said resilient ring (78) bearing with one side against the tapering surface of said tapering bore portion (17),
wherein the bearing bracket comprises two substantially parallel side plates (71, 72) provided with holes for passing through the hinge pin (11), wherein the attachment eye (15) of the suspension arm (5) is located between the side plates (71, 72) such that the central bore (20) therein and the holes in the side plates (71, 72) are brought in line,
or wherein the bearing bracket comprises one single side plate provided with a hole for passing through the hinge pin wherein the attachment eye of the suspension arm is located against the side plate such that the central bore therein and the hole in the side plate are brought in line,
and wherein in each of the side plates is formed an inwardly projecting dent (73), wherein the inner side of the dent (73) is received in the tapering bore portion (17) of the eye, and wherein the clamping member(s) (75) is/are received in the outer side of the dent (17), said clamping member (75) being forced against the outer side of the dent (73) whereby the resilient ring (78) is compressed between the dent and the tapering surface of the tapering bore portion,
wherein on the inner side of the dent is arranged the resilient ring (78), which is made of rubber vulcanised on a dish-shaped metal ring (77), wherein the metal ring (77) is facing the side plate and the rubber is facing the surface of the tapering bore portion (17) of the attachment eye (15).

2. Wheel axle suspension according to claim 1, wherein the attachment eye comprises a central bore portion (16) and two opposing tapering bore portions (17), wherein the central bore portion (16) connects the inner ends of the opposing tapering bore portions (17).

3. Wheel axle suspension according to any one of the preceding claims, wherein the tapering surface of the tapering bore portion (17) is conical.

4. Wheel axle suspension according to any one of the preceding claims, wherein the clamping member (75) has a frusto-conical shape.

5. Wheel axle suspesnion according to claim 1 or 2, wherein the diameter of the tapering bore portion is decreasing along a curve.

6. Wheel axle suspension according to claim 5, wherein the clamping member is spherical.

7. Wheel axle suspesnion according to any one of the preceding claims, wherein the resilient ring has at the radial outer end a greater thickness than at the radial inner end.

8. Wheel axle suspension according to any one of the preceding claims, wherein in the central bore (16) between the ends of the clamping members facing each other is arranged a spacer bushing (76).

9. Wheel axle suspension according to any one of the preceding claims, wherein the attachment eye (15) is integrally formed on the front end of the suspension arm (5).

10. Wheel axle suspension according to any one of the preceding claims, wherein the suspension arm (5) is manufactured by forging.

## Patentansprüche

1. Radachsenaufhangung fur ein Kraftfahrzeug, bestehend aus einem Langstragarm (5), an dem die Achse (1) befestigt ist, einer am Fahrgestell befestigten Lagerkonsole und einer am Fahrgestell anliegenden Luftfeder (7), wobei der Tragarm (5), in Fahrtrichtung des Fahrzeugs betrachtet, am hinteren Ende an der Luftfeder (7) befestigt ist und am vorderen Ende an der Lagerkonsole uber eine Scharnieranordnung drehbar gelagert ist, bestehend aus einer am Tragarm (5) angebrachten Befestigungsose (15), einem Scharnierstift (11), beispielsweise einem Gelenkbolzen, der an der Lagerkonsole befestigt ist und der durch die Befestigungsose (15) hindurchreicht, wobei die Befestigungsose (15) mit einer Bohrung (20) fur den Scharnierstift (11) versehen ist, bestehend aus mindestens einem kegelformigen Bohrungsabschnitt (17), und die Scharnieranordnung desweiteren mindestens einen Federring (78) und ein Klemmstuck (75) besitzt, jeweils mit einer zentralen Bohrung fur den Scharnierstift versehen, wobei im montierten Zustand der Federring (78) zumindest teilweise von besagtem kegelformigen Bohrungsabschnitt (17) aufgenommen wird, und besagter Federring (78) mit einer Seite an der sich verjungenden Flache besagten kegelformigen Bohrungsabschnitts (17) anliegt,
wobei die Lagerkonsole aus zwei im Wesentlichen parallelen Seitenplatten (71, 72) besteht, die mit Bohrungen versehen sind, um den Scharnierstift (11) hindurchzufuhren, wobei sich die Befestigungsose (15) des Tragarms (5) zwischen den Seitenplatten (71, 72) befindet, so dass die zentrale Bohrung (20) der Ose mit den Bohrungen in den Seitenplatten (71, 72) fluchtet, bzw. wobei die Lagerkonsole eine einzelne Seitenplatte mit einer Bohrung zur Durchfuhrung des Scharnierstifts umfasst, wobei die Befestigungsose des Tragarms so an der Seitenplatte anliegt, dass die zentrale Bohrung der Ose mit der Bohrung in der Seitenplatte fluchtet,
und wobei in jede der Seitenplatten eine nach innen weisende Vertiefung (73) eingeformt ist, wobei die Innenseite der Vertiefung (73) im kegelformigen Bohrungsabschnitt (17) der Ose aufgenommen wird, und wobei das (die) Klemmstuck(e) (75) von der Auftenseite der Vertiefung (73) aufgenommen wird (werden), wobei besagtes Klemmstuck (75) gegen die AuRenseite der Vertiefung (73) gedruckt wird, und wobei der Federring (78) zwischen die Vertiefung und die sich verjungende Flache des kegelformigen Bohrungsabschnitts gepresst wird,
wobei auf der Innenseite der Vertiefung der Federring (78) angeordnet ist, der aus auf einen tellerformigen Metallring (77) vulkanisiertem Gummi besteht, wobei der Metallring (77) der Seitenplatte zugewandt und der Gummi zur Flache des kegelformigen Bohrungsabschnitts (17) der Befestigungsose (15) hin gerichtet ist.

2. Radachsenaufhangung nach Anspruch 1, wobei die Befestigungsose einen zentralen Bohrungsabschnitt (16) und zwei gegenuberliegende kegelformige Bohrungsabschnitte (17) beinhaltet, wobei der zentrale Bohrungsabschnitt (16) die inneren Enden der gegenuberliegenden kegelformigen Bohrungsabschnitte (17) verbindet.

3. Radachsenaufhangung nach einem der vorangehenden Anspruche, wobei die sich verjungende Flache des kegelformigen Bohrungsabschnitts (17) konisch ist.

4. Radachsenaufhangung nach einem 3 der vorangehenden Anspruche, wobei das Klemmstuck (75) kegelstumpfformig ist.

5. Radachsenaufhangung nach Anspruch 1 oder 2, wobei der Durchmesser des kegelformigen Bohrungsabschnitts entlang einer Kurve abnimmt.

6. Radachsenaufhangung nach Anspruch 5, wobei das Klemmstuck kugelformig ist.

7. Radachsenaufhangung nach einem der vorangehenden Anspruche, wobei der Federring am radial aufteren Ende dicker ist als am radial inneren Ende.

8. Radachsenaufhangung nach einem der vorangehenden Anspruche, wobei in der zentralen Bohrung (16) zwischen den Enden der einander zugewandten Klemmstucke eine Abstandsbuchse (76) angebracht ist.

9. Radachsenaufhangung nach einem der vorangehenden Anspruche, wobei die Befestigungsose (15) am vorderen Ende des Tragarms (5) integral angeformt ist.

10. Radachsenaufhangung nach einem der vorangehenden Anspruche, wobei der Tragarm (5) durch Schmieden hergestellt ist.

## Revendications

1. Suspension pour essieu de véhicule, comprenant un bras de suspension (5) longitudinal sur lequel l'axe (1) est monté, un palier porteur fixé au châssis du véhicule et un ressort pneumatique (7) en appui contre le châssis du véhicule, dans laquelle le bras de suspension (5), vu dans la direction de déplacement du véhicule, est fixé en son extrémité arrière au ressort pneumatique (7) et en son extrémité avant au palier porteur au moyen d'un dispositif articulé, comprenant un oeillet de fixation (15) fixé sur le bras de suspension (5), et un axe d'articulation (11), par exemple un goujon d'articulation, attaché au palier porteur, lequel axe d'articulation (11) s'étend à travers l'oeillet de fixation (15), dans laquelle l'oeillet de fixation (15) présente un alésage (20) pour l'axe d'articulation (11) qui comprend au moins une portion conique d'alésage (17), le dispositif comprenant en outre au moins une bague élastique (78) et un élément de fixation (75) chacun pourvu d'un alésage central pour l'axe d'articulation, dans laquelle, à l'état assemblé, la bague élastique (78) est logée au moins partiellement dans ladite portion conique d'alésage (17), ladite bague élastique (78) portant d'un côté contre la surface conique de ladite portion conique d'alésage (17) ;
dans laquelle le palier porteur comprend deux plaques latérales (71, 72) substantiellement parallèles pourvues de trous pour être traversées par l'axe d'articulation (11), dans laquelle l'oeillet de fixation (15) du bras de suspension (5) est localisé entre les plaques latérales (71, 72) de sorte que l'alésage (20) central et les trous dans les plaques latérales (71, 72) sont alignés,
ou dans laquelle le palier porteur comprend une seule plaque latérale pourvue d'un trou à travers lequel passe l'axe d'articulation dans lequel l'oeillet de fixation du bras de suspension est prévu contre la plaque latérale de sorte que l'alésage central et le trou dans la plaque latérale sont alignés,
et dans laquelle dans chacune des plaques latérales une dent (73) est formée en saillie vers l'intérieur, dans laquelle la coté interne de la dent (73) est reçu dans la portion conique d'alésage (17) de l'oeillet, et dans laquelle le(s) membre(s) de fixation (75) est/sont reçu(s) dans le côté externe de la dent (17), ledit élément de fixation (75) étant plaqué contre le côté externe de la dent (73) par lequel la bague élastique (78) est compressée entre la dent et sur la surface conique de la portion conique d'alésage,
dans laquelle la bague élastique (78) faite de caoutchouc vulcanisé sur un anneau de métal (77) en forme de cuvette est disposé dans le côté interne de la dent, dans laquelle l'anneau de métal (77) est en regard de la plaque de côté et le caoutchouc est en regard de la surface de la portion conique d'alésage (17) de l'oeillet de fixation (15).

2. Suspension pour essieu selon la revendication 1, dans laquelle l'oeillet de fixation comprend une portion d'alésage central (16) et deux portions conique d'alésage (17) opposées, dans laquelle la portion d'alésage central (16) relie les extrémités intérieures des portions coniques d'alésage (17) opposées.

3. Suspension pour essieu selon l'une quelconque des revendications précédentes, dans laquelle la surface d'alésage de la portion conique d'alésage (17) est conique.

4. Suspension pour essieu selon l'une quelconque des revendications précédentes, dans laquelle l'élément de fixation (75) est de forme tronconique.

5. Suspension pour essieu selon la revendication 1 ou 2, dans laquelle le diamètre de la portion conique d'alésage diminue le long d'une courbe.

6. Suspension pour essieu selon la revendication 5, dans laquelle l'élément de fixation est sphérique.

7. Suspension pour essieu selon l'une quelconque des revendications précédentes, dans laquelle la bague élastique comprend à son extrémité radiale interne une épaisseur plus importante qu'en son extrémité radiale interne.

8. Suspension pour essieu selon l'une quelconque des revendications précédentes, dans laquelle dans l'alésage central (16) entre les extrémités des éléments de fixation en regard les uns des autres est disposé une bague d'écartement (76).

9. Suspension pour essieu selon l'une quelconque des revendications précédentes, dans laquelle l'oeillet de fixation (15) est intégralement formé sur l'extrémité avant du bras de suspension (5).

10. Suspension pour essieu selon l'une quelconque des revendications précédentes, dans laquelle le bras de suspension (5) est fabriqué par forgeage.
